# FASCICULE DE BREVET EUROPEEN

(11) **EP 2 425 300 B1**
(45) Date de publication et mention de la délivrance du brevet: **28.12.2016**
(21) Numéro de dépôt: 10727065.4
(22) Date de dépôt: 29.04.2010
(51) Int. Cl.: G03H 1/02, G03H 1/04, G03H 1/18

(54) **FILM HOLOGRAPHIQUE METALLISÉ ET SON PROCÉDÉ DE FABRICATION**
METALLISED HOLOGRAPHIC FILM AND METHOD FOR MAKING SAME
METALLISED HOLOGRAPHIC FILM AND METHOD FOR MAKING SAME

(30) Priorité: 30.04.2009 FR 0902120
(43) Date de publication de la demande: 07.03.2012
(73) Titulaire: FASVER, 34670 Baillargues (FR)
(72) Inventeur: TRANTOUL, François, F-34400 Lunel (FR); LEROY, Jean-Yves, F-34160 Restinclieres (FR); BES, Laurence, F-34830 Jacou (FR)
(74) Mandataire: Cabinet BARRE LAFORGUE & associés
(86) Numéro de dépôt international: PCT/FR2010/050818
(87) Numéro de publication internationale: WO 2010/125316

(56) Documents cités:
- EP-A- 0 201 323
- US-A- 5 629 068
- US-A1- 2003 158 308
- US-A1- 2009 098 327

## Description

L'invention concerne un film, notamment holographique, métallisé, et un procédé de fabrication d'un tel film, notamment holographique, métallisé.

Les films dits « holographiques » métallisés sont bien connus et utilisés notamment pour le marquage de produits ou de documents officiels tels que des cartes d'identité, des passeports, des cartes de crédit, des chèques, des billets de banque, des titres de transport, des tickets d'entrée, des cartes donnant droit à des prestations diverses, etc. Un tel marquage « holographique » permet en particulier de sécuriser le produit ou document en l'identifiant et/ou garantissant son authenticité et/ou empêchant son altération et/ou empêchant sa reproduction.

De tels films holographiques connus peuvent se présenter sous forme de films en bobine à découper au moment de leur application sur le produit ou le document à protéger, de films prédécoupés sous forme de vignettes à intégrer dans la fabrication d'un produit ou d'un document, d'étiquettes autoadhésives, ou de films transfert permettant le transfert d'une marque « holographique » sur un substrat à marquer (FR 2897556).

Les films holographiques métallisés connus comprennent une ou plusieurs couches transparentes dont l'une au moins est estampée de façon à présenter au moins un motif apte à former au moins une image, dite image holographique, visible en transparence et par diffraction. Dans tout le texte, on désigne par « holographique » toute image formée par diffraction par une structure en relief.

De façon traditionnelle, ces couches transparentes comprennent un support en polyester, éventuellement une couche de détachement s'il s'agit d'un transfert, et une couche d'estampage, le motif estampé étant réalisé sur la face de cette couche d'estampage opposée au support. Différents procédés connus peuvent être utilisés pour réaliser ce motif estampé : application d'une matrice d'estampage, gaufrage, gravure, faisceau de particules...

Pour conférer un aspect métallisé réfléchissant à au moins une portion du motif, au moins une couche métallisée réfléchissante est appliquée en regard et au format de ladite portion. Une telle couche métallisée réfléchissante peut être une couche HRI (« High Reflex Index », couche à haut indice de réflexion) réalisée par dépôt sous vide par vaporisation de sulfure de zinc et/ou d'aluminium.

Ensuite, une étape de dissolution soustractive sélective d'au moins une telle couche métallisée réfléchissante est réalisée pour former des motifs constitués de portions délimitées d'image(s) holographique(s) métallisées, notamment lorsque ladite couche métallisée réfléchissante est opaque. Pour ce faire, on applique une couche de vernis protecteur en regard des portions qui doivent rester métallisées, et on soumet le film à une attaque chimique, par exemple par immersion dans un bain corrosif tel qu'un bain d'hydroxyde de sodium à température élevée. Après rinçage et neutralisation dans un bain acide, on obtient le film holographique métallisé en regard de certaines portions (en général opaques si la couche métallisée l'est), et transparent en regard des autres portions non métallisées. Ce procédé connu est le seul qui permet d'obtenir des motifs holographiques métallisés de résolution relativement fine, notamment des graphismes ou textes de largeur de trait maximum de l'ordre de 0,6 mm, ou des motifs guillochés de largeur de trait maximum de l'ordre de 0.1 mm.

Dans une variante connue, on applique tout d'abord une couche HRI continue qui reste au moins partiellement transparente en regard de toutes les images holographiques et sensiblement au format de la couche estampée, puis une couche de dépôt métallique opaque délimitée par dissolution soustractive sélective pour former des motifs comme indiqué ci-dessus.

Ces procédés de fabrication sont coûteux, nécessitent des installations spécifiques complexes et coûteuses, impliquent la réalisation de plusieurs (au moins quatre) étapes successives, et sont longs et difficiles à mettre en oeuvre (dépôt sous vide et attaque chimique).

Ils ne peuvent pas être mis en oeuvre dans des sites de pays peu développés industriellement. Or, il serait avantageux de pouvoir réaliser la fabrication de marquages holographiques, notamment à des fins de sécurité au plus proche des sites d'utilisation, et ce non seulement pour des raisons d'économie et de respect de l'environnement, mais également pour éviter l'intervention de multiples personnes, des délais et des transports, susceptibles de constituer des risques vis-à-vis de la sécurité.

En outre, ces étapes de dépôt sous vide et d'attaque chimique sont non respectueuses de l'environnement, et nécessitent une gestion spécifique et coûteuse des déchets. En particulier, il est à noter que les étapes permettant de réaliser l'attaque chimique produisent des eaux de lavage et de rinçage contenant des substances métalliques toxiques qui doivent elles-mêmes faire l'objet de traitements d'épuration.

Par ailleurs, les étapes d'attaque chimique sont susceptibles de dissoudre ou détériorer non seulement les portions non protégées de la couche métallisée transparente, mais également les éventuelles couches sous-jacentes, par exemple des portions d'une couche réfléchissante HRI formé d'un dépôt de sulfure de zinc, et/ou d'autres inscriptions au dispositif de sécurité éventuellement préalablement incorporés. En conséquence, les procédés de fabrication connus de films holographiques sont peu compatibles avec l'obtention de films complexes présentant une pluralité de dispositifs différents fournissant une pluralité de fonctions sécuritaires distinctes.

Les films obtenus sont donc aussi coûteux, et limités dans leurs applications. En particulier, il est à noter qu'une partie importante de la matière première utilisée pour la fabrication des films est rejetée sous forme de déchets (portions de la couche métallisée dissoutes par attaque chimique).

En outre, les motifs métallisés réfléchissants pouvant être réalisés par la délimitation des portions d'image(s) holographique(s) métallisées ne peuvent pas présenter une très grande finesse, en largeur et/ou en largeur de trait, ni des formes complexes et tourmentées, non compatibles avec l'attaque chimique ultérieurement réalisée.

Par ailleurs, dans une autre variante décrite dans US 5 629 068, on applique directement une couche d'encre à effet métallique, pouvant contenir des lamelles métalliques, sur une couche estampée. Dans le procédé de fabrication décrit dans US 5 629 068 les lamelles métalliques doivent être très fines et de longueur et de largeur suffisamment importantes pour pouvoir relier les pics des motifs en reliefs de la couche estampée. Les motifs métallisés réfléchissants ainsi réalisés sont toutefois limités en termes d'effets holographiques et d'applications.

L'invention vise à pallier ces inconvénients.

Elle vise donc en particulier à proposer un film métallisé, notamment un film holographique métallisé, peu coûteux et pouvant présenter des motifs métallisés réfléchissants de très grande finesse, typiquement avec une dimension en largeur inférieure à 1 mm, notamment de l'ordre de 0,5 mm et/ou une hauteur de caractère et/ou largeur de trait inférieure à 0,6 mm, plus particulièrement inférieure à 0,1 mm, avec des formes pouvant être complexes et/ou tourmentées, par exemple des graphismes complexes, des textes ou des motifs guillochés.

L'invention vise également à proposer un tel film métallisé pouvant présenter des aspects colorés autres que les aspects or ou argent usuels qu'il est possible d'obtenir par dépôt métallique sous vide.

L'invention vise également à proposer un tel film holographique présentant des portions métallisées réfléchissantes opaques en regard d'images holographiques, et des portions transparentes -notamment des portions transparentes réfléchissantes en regard d'images holographiques-.

L'invention vise également à proposer un tel film, notamment un film holographique, pouvant incorporer d'autres inscriptions et/ou dispositifs et/ou motifs de sécurité.

L'invention vise à proposer un tel film, notamment un film holographique, qui puisse faire l'objet de nombreuses applications, en particulier d'applications autres que celles pour lesquelles les films, notamment les films holographiques, connus sont utilisés.

L'invention vise également à proposer un procédé de fabrication d'un tel film, notamment d'un film holographique, selon l'invention, qui soit simple, peu coûteux, et comporte un plus faible nombre d'étapes. Elle vise en particulier à proposer un tel procédé de fabrication qui puisse être mis en oeuvre avec des moyens simples et peu coûteux, en différents sites, y compris non industriels et dans des pays peu développés, à proximité immédiate des sites d'utilisation des films ainsi fabriqués.

L'invention vise également à proposer un procédé de fabrication plus respectueux de l'environnement et avec lequel la gestion des déchets est simplifiée.

L'invention vise également à proposer un tel procédé qui permette la réalisation de motifs métallisés réfléchissants avec des formes pouvant être complexes et/ou tourmentées, par exemple des textes ou des motifs guillochés.

Pour ce faire, l'invention concerne un film holographique métallisé selon la revendication 1.

L'invention s'étend à un procédé de fabrication d'un film selon l'invention. Elle concerne donc également un procédé de fabrication d'un film holographique métallisé selon la revendication 11.

La réalisation d'une couche réfléchissante par simple impression d'une couche d'encre métallisée permet de s'affranchir des étapes de métallisation sous vide et de dissolution soustractive sélective par attaque chimique, et des nombreux inconvénients qui en résultent.

Avantageusement et selon l'invention, un film métallisé selon l'invention comprend au moins une couche transparente. Ladite couche transparente peut par exemple être constituée d'un film mince transparent en polyuréthane.

Dans un mode de réalisation particulièrement avantageux d'un film selon l'invention, ladite couche transparente est une couche holographique présentant au moins un motif apte à former au moins une image, dite image holographique, visible en transparence et par diffraction, et ladite couche réfléchissante s'étend en regard et au format d'au moins une image holographique, ladite couche réfléchissante étant une couche d'encre métallisée imprimée en regard et au format d'au moins une image holographique formant ainsi une image holographique métallisée.

Les inventeurs ont en effet constaté, de façon tout à fait surprenante, que l'impression d'une couche d'encre métallisée sur une couche présentant de telles propriétés de surface, et non directement sur la couche holographique, permet de favoriser l'alignement de tout type de particules métallisées parallèlement à la surface de ladite couche présentant de telles propriétés de surface en contact avec la couche d'encre métallisée, sans nécessiter de sélectionner des particules métallisées de granulométrie spécifique, notamment ayant des longueurs ou largeurs appartenant à une gamme spécifique.

En outre, elle permet la réalisation de motifs métallisés réfléchissants de formes quelconques, avec une très grande finesse, de façon similaire à l'impression de motifs imprimés quelconques. La qualité et la précision de ces motifs métallisés dépend uniquement du procédé d'impression utilisé, ce dernier pouvant être choisi parmi tous les procédés d'impression : sérigraphie, flexographie, impression offset, lithographie, héliographie... On peut ainsi aisément réaliser des motifs métallisés, notamment des motifs holographiques métallisés, formés de textes ou guillochés avec une très grande finesse, et transmis en réflexion avec un rendement supérieur à 90 %. Avantageusement et selon l'invention, on imprime au moins une couche d'encre métallisée par impression sérigraphique.

Avantageusement et selon l'invention, on imprime au moins une couche d'encre métallisée par flexographie, en particulier à l'aide de rouleaux en matériau céramique, dits « rouleaux anilox ». Les rouleaux anilox utilisés sont par exemple ceux commercialisés par la société PRAXAIR, dont la surface de trame est de 160 L/cm. dont le volume d'alvéoles est de 15 cm³/m² et dont les alvéoles présentent un angle de 45°. Cette méthode d'impression par flexographie à l'aide de rouleaux anilox permet d'imprimer des motifs de 400 lpi de définition.

En outre, la réalisation de ces motifs avec une telle couche d'encre métallisée imprimée est particulièrement simple, économique, évite tout gaspillage de matières premières, est respectueuse de l'environnement (en particulier ne génère pas de déchets métalliques), est facile à mettre en oeuvre sur des sites quelconques, y compris dans les pays en voie de développement, à proximité des sites d'utilisation. Elle peut être réalisée en continu à partir d'un film holographique en bobine pour obtenir un film holographique selon l'invention.

Par ailleurs, l'impression d'une couche d'encre métallisée est parfaitement compatible avec toutes les autres couches et tous les autres motifs et/ou dispositifs de sécurité préalablement réalisés.

Avantageusement et selon l'invention, ladite couche d'encre métallisée imprimée comprend un liant durci incorporant au moins une charge de particules métallisées présentant un aspect métallique réfléchissant. En particulier, avantageusement et selon l'invention, ladite couche d'encre métallisée imprimée comprend au moins une charge de particules métallisées choisies parmi les pigments métallisés sous vide et les particules métalliques réfléchissantes. Par « particules métalliques » on désigne des particules réalisées en au moins un métal ou un alliage métallique présentant un aspect réfléchissant, par exemple un alliage d'aluminium et/ou de cuivre. Avantageusement et selon l'invention, les particules métallisées sont formées à partir d'un dépôt métallique obtenu par vaporisation sous vide, ou comportant un tel dépôt conférant leur aspect métallisé.

De préférence, avantageusement et selon l'invention, ladite charge de particules métallisées comprend des particules en forme générale de plaquettes présentant des faces réfléchissantes favorisant les phénomènes de réflexion. Ces plaquettes et leurs faces peuvent être planes ou gauches, de contour quelconque, pouvant être défini et identique pour toutes les plaquettes, ou au contraire aléatoire et/ou indéfini (variant d'une plaquette à une autre), notamment en forme générale de pétales, copeaux ou tessons. En outre, avantageusement et selon l'invention, ladite couche d'encre métallisée imprimée est appliquée au contact d'une couche de vernis présentant une tension de surface supérieure à 40 dynes/cm et un état de surface lisse de réflexion spéculaire supérieure à 50% mesurée selon la norme ISO 2813 avec un angle de 60°. En effet, il s'est avéré que l'impression d'une couche d'encre métallisée sur une telle couche de vernis permet de favoriser l'alignement des particules métalliques parallèlement à la surface de la couche de vernis, créant ainsi un recouvrement à la façon d'écailles, augmentant considérablement l'effet de réflexion.

En outre, avantageusement et selon l'invention les particules métallisées présentent une granulométrie moyenne comprise entre 8 µm et 11 µm.

En outre, avantageusement et selon l'invention, au moins une couche holographique est formée d'une couche transparente estampée de façon à présenter des microstructures aptes à former au moins une image holographique.

Par ailleurs, avantageusement et selon l'invention, ladite couche d'encre métallisée imprimée s'étend selon au moins un motif présentant un format inférieur à celui du film. Autrement dit, le(les) motif(s) holographique(s) formé(s) par ladite couche d'encre métallisée imprimée s'étend(ent) sur une partie seulement de la face de la couche holographique sur laquelle il(s) est(sont) imprimé(s).

Dans un mode de réalisation préférentiel, un film selon l'invention est caractérisé en ce qu'il comprend :
- un support transparent définissant son format,
- au moins une couche holographique recouvrant ledit support et de format similaire à celui du support,
- au moins une couche de vernis transparent recouvrant la(les) couche(s) holographique(s) et de format similaire à celui du support,
et en ce que chaque couche d'encre métallisée imprimée s'étend sur la dernière couche de vernis transparent selon un format inférieur à celui du support. Dans ce mode de réalisation, un film holographique selon l'invention est transparent, à l'exception des portions métallisées formées par la couche métallisée imprimée, qui forme des motifs holographiques métallisés réfléchissants opaques.

Par ailleurs, un film selon l'invention comprend avantageusement aussi au moins une couche à haut indice de réfraction optique entre la(les) couche(s) holographique(s) et chaque couche d'encre métallisée imprimée. Dans un mode de réalisation avantageux et selon l'invention, chaque couche à haut indice de réfraction optique s'étend selon un format similaire à celui du support.

Par ailleurs, selon un mode de réalisation avantageux, un film selon l'invention comprend en outre au moins une couche de vernis de protection s'étendant à recouvrement de la(les) couche(s) à haut indice de réfraction optique, chaque couche d'encre métallisée imprimée s'étendant sur la dernière couche de vernis de protection. De préférence, ladite dernière couche de vernis de protection présente, sur sa face recouverte par chaque couche donc métallisée imprimée, un état de surface très lisse, et notamment un état de surface lisse de réflexion spéculaire supérieure à 50% mesurée selon la norme ISO 2813 avec un angle de 60°.

Par ailleurs, rien n'empêche de prévoir d'autres couches intermédiaires, d'autres impressions de dispositifs ou inscriptions de sécurité, par exemple comme décrit dans les brevets FR 2840431, FR 2793726, FR 2867590, ou autres, cette liste n'étant pas limitative. Par exemple, au moins une couche de vernis translucide teinté peut être prévue avant impression des motifs formés par la couche d'encre métallisée, de façon à colorer chaque image holographique métallisée ainsi formée.

En outre, avantageusement, un film selon l'invention comprend une couche d'adhésif à l'opposé du support. De la sorte, un film selon l'invention peut être appliqué sur un substrat grâce à cette couche d'adhésif qui peut être aussi bien un adhésif sensible à la pression à température ambiante (autoadhésif), ou un adhésif réactivable à chaud ou autre.

Également, rien n'empêche de prévoir une couche de détachement entre le support et la(les) couche(s) holographique(s), de façon à former un transfert.

Par ailleurs, selon un autre mode de réalisation avantageux, ladite couche de vernis peut comprendre des colorants solubles dans les solvants organiques ou des pigments transparents adaptés pour permettre l'obtention d'un effet miroir coloré.

Dans un autre mode de réalisation avantageux, on utilise une composition d'impression comprenant un liant durci incorporant au moins un colorant soluble dans les solvants organiques, adapté pour permettre l'obtention d'un effet miroir coloré.

Un procédé selon l'invention est aussi avantageusement caractérisé en ce qu'il est adapté pour obtenir un film selon l'invention tel que mentionné ci-dessus.

Dans un mode de réalisation particulièrement avantageux d'un procédé selon l'invention, on réalise avec au moins une couche transparente, dite couche holographique, au moins un motif apte à former au moins une image, dite image holographique, visible en transparence et par diffraction, et on imprime une couche d'encre métallisée en regard et au format d'au moins une image holographique de façon à obtenir une image holographique métallisée.

En particulier, avantageusement et selon l'invention, pour réaliser ladite couche d'encre métallisée imprimée, on utilise une composition d'impression comprenant un liant durcissable incorporant au moins une charge de particules métallisées présentant un aspect métallique réfléchissant. Par exemple, avantageusement et selon l'invention on utilise une composition d'impression comprenant au moins une charge de particules métallisées choisies parmi les pigments métallisés et les particules métalliques réfléchissantes. En outre, un procédé selon l'invention est aussi avantageusement caractérisé en ce qu'on utilise une composition d'impression comprenant, à titre de charges de particules métallisées, des particules en forme générale de plaquettes présentant des faces réfléchissantes, et en ce qu'on imprime ladite couche d'encre métallisée imprimée au contact d'une couche de vernis présentant une tension de surface supérieure à 40 dynes/cm et un état de surface lisse de réflexion spéculaire supérieure à 50% mesurée selon la norme ISO 2813 avec un angle de 60°.

L'invention concerne également un film holographique et un procédé de fabrication caractérisés en combinaison par tout ou partie des caractéristiques mentionnées ci-dessus ou ci-après.

D'autres buts, caractéristiques et avantages de l'invention apparaissent à la lecture de la description suivante qui se réfère aux figures annexées représentant à titre non limitatif un exemple de réalisation de l'invention et dans lesquelles :
- les figures la à le sont des vues schématiques en coupe représentant différentes étapes successives d'un procédé de fabrication selon un exemple de réalisation de l'invention,
- la figure 2 est une vue schématique en perspective illustrant un film holographique selon l'invention en cours d'application sur un substrat à protéger,
- la figure 3 est une vue schématique de dessus illustrant le substrat protégé obtenu par application d'un film holographique selon l'invention conformément à la figure 2.

Sur les figures la à le, les échelles d'épaisseur sont exagérément agrandies, et ne sont pas proportionnellement respectées, et ce à des fins d'illustration. Ces figures représentent un exemple de procédé de fabrication selon l'invention d'un film transparent holographique partiellement métallisé selon l'invention.

On part d'un ensemble multicouche, dit film holographique 10, 11,12, comprenant :
- une couche 10 de support transparent, qui est par exemple formée à partir d'un film polyester PET, et présente une épaisseur généralement comprise entre 10 µm et 50 µm, notamment de l'ordre de 20 µm,
- un ensemble d'estampage transparent comprenant au moins une couche transparente (c'est-à-dire une couche unique d'estampage transparente comme schématisé sur les figures, ou un complexe multicouche d'estampage transparent), et dont l'épaisseur est généralement comprise entre 1 µm et 50 µm par exemple de l'ordre de 5 µm,
- éventuellement (si le film selon l'invention doit être un transfert), une couche 11 de détachement qui est par exemple réalisée en cire ou en silicone ou autre, interposée entre la couche 10 de support et l'ensemble d'estampage.

Dans l'exemple représenté figure la, trois images holographiques 13a, 13b, 13c sont réalisées par des microstructures formées sur la face de l'ensemble d'estampage à l'opposé du film support 10, ces microstructures étant réalisées de façon à former des motifs visibles par diffraction (réseaux de diffraction, hologrammes...) et par transparence à travers le film holographique 10, 11, 12. De telles images holographiques 13a, 13b, 13c sont en général elles-mêmes suffisamment transparentes pour ne pas être opaques, c'est-à-dire permettent la visualisation d'inscriptions ou de motifs qu'elles sont susceptibles de recouvrir lorsque le film est ultérieurement appliqué sur un substrat.

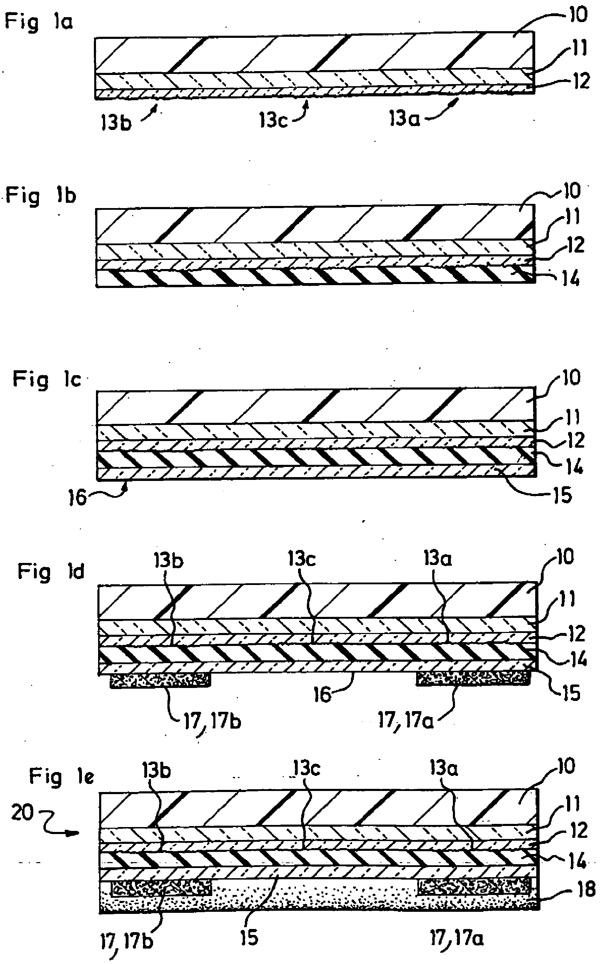

Une couche 14 de matériau diélectrique HRI à haut indice de réfraction optique (c'est-à-dire typiquement de l'ordre de 2,4) est ensuite réalisée (figure 1b) à recouvrement de l'ensemble d'estampage et des images holographiques 13a, 13b, 13c. Une telle couche 14 peut être réalisée par dépôt sous vide, par exemple par vaporisation de sulfure de zinc avec une épaisseur de l'ordre de 60 nm. Cette fine couche 14 est réfléchissante, en ce sens qu'elle permet d'augmenter de l'ordre de 20 % le pouvoir réfléchissant en lumière visible. Elle reste cependant suffisamment transparente pour ne pas être opaque, c'est-à-dire pour permettre la visualisation d'inscriptions ou de motifs qu'elle est susceptible de recouvrir lorsque le film est ultérieurement appliqué sur un substrat.

Sur cette couche 14 réfléchissante lorsqu'elle est prévue (à défaut directement sur l'ensemble 12 estampé) on imprime une couche 15 de vernis transparent de finition présentant une surface 16 très lisse et à haute tension de surface, c'est-à-dire exempte de défauts de surface (tels que peau d'orange, yeux de poisson ou trous d'épingle) et adaptée pour présenter une tension de surface supérieure à 40 dynes/cm et un état de surface lisse de réflexion spéculaire supérieure à 50% mesurée selon la norme ISO 2813 avec un angle de 60°. Pour ce faire, on peut utiliser une composition de vernis à séchage ultraviolet ou à solvant acrylique, ayant une transparence supérieure à 90 %, hautement brillant, par exemple telle que commercialisée sous la référence ultraflex ® par la société Marabu (www.marabu-druckfarben de) ou autre. Cette couche 15 de vernis transparent peut être teintée et/ou recouvrir une couche de vernis teinté préalablement réalisée (non représentée sur les figures), permettant de modifier la couleur de fond du film holographique selon l'invention obtenu, et en particulier de l'effet métallique réalisé comme indiqué ci-après.

La couche 15 de vernis peut comprendre des colorants solubles dans les solvants organiques ou des pigments transparents adaptés pour permettre l'obtention d'un effet miroir coloré. Pour ce faire, on peut utiliser une composition de vernis transparent à séchage ultraviolet telle que commercialisée sous la référence Marastar SR par la société MARABU (France) dans lequel on ajoute 5 à 25 % d'une encre à séchage ultraviolet de coloration jaune or tels que commercialisée par la société Tiflex (Poncin, France) référencé 3*5559.

Il est à noter que la couche 15 de vernis de finition peut être omise si l'état de surface de la couche 14 réfléchissante est suffisant, c'est-à-dire est lisse, de réflexion spéculaire supérieure à 50% mesurée selon la norme ISO 2813 avec un angle de 60°.

Sur la surface 16 de la couche 15 de vernis de finition, ou sur la surface de la couche 14 réfléchissante si la couche 15 de vernis de finition est omise, on imprime une couche 17 d'encre métallisée en regard des images holographiques 13a, 13b, qui doivent être métallisées. Ainsi, on imprime cette couche 17 d'encre métallisée de façon à former des motifs 17a, 17b s'étendant en regard respectivement de chaque image holographique 13a, 13b.

Cette impression peut être réalisée par tout procédé d'impression traditionnelle, et peut donc en présenter les qualités et propriétés. Par exemple, la couche 17 d'encre métallisée est imprimée par sérigraphie. La couche 17 d'encre métallisée peut également être imprimée par flexographie.

Pour réaliser la couche 17 d'encre métallisée, on utilise une composition d'impression appropriée, comprenant une charge de particules métallisées présentant un aspect métallique réfléchissant, dispersée dans une composition de liant durcissable qui peut être formée d'une encre d'impression transparente traditionnelle, par exemple une composition d'encre solvant transparente commercialisée par la société Mistral Graphic (Carcassonne, France). La couche 17 d'encre métallisée est imprimée comme une couche d'encre traditionnelle, sur une couche (15 de vernis ou 14 réfléchissante) à haute tension de surface et présentant une surface très lisse, notamment une tension de surface supérieure à 40 dynes/cm et un état de surface lisse de réflexion spéculaire supérieure à 50% mesurée selon la norme ISO 2813 avec un angle de 60°.

Ladite charge de particules métallisées peut incorporer des particules en forme générale de plaquettes, par exemple sous forme de pétales, copeaux ou tessons, qui ont été elles-mêmes préalablement fabriquées par métallisation sous vide. De telles particules peuvent être obtenues par sublimation sous vide et vaporisation d'aluminium métallique sur un support tel qu'un film polyester, la fine couche d'aluminium obtenue étant ensuite détachée du support puis broyée avec la granulométrie souhaitée, notamment comprise entre 8 µm et 11 µm, avec une épaisseur de l'ordre de 300 angstroms correspondant à celle de la couche d'aluminium déposée.

En variante ou en combinaison, la charge de particules métallisées peut incorporer des particules métallisées choisies parmi la composition de pigments métallisés commercialisée sous la référence Xymara Metasheen® par la société Ciba (Bâle, Suisse), et la composition de pigments métallisés commercialisée sous la référence starbrite® par la société Silberline (Leven, Royaume-Uni).

Ces particules métallisées sont utilisées avec une quantité suffisante dans la composition d'impression pour procurer, selon le procédé d'impression utilisé, l'effet réfléchissant souhaité après impression et durcissement. Par exemple, dans le cas d'une impression sérigraphique, la quantité de charge de particules métallisées dans la composition d'impression est comprise entre (proportions en volume) 5 % et 15 %, notamment de l'ordre de 10 %.

Une telle couche 17 d'encre métallisée est réfléchissante et opaque, et peut présenter à ce titre des propriétés similaires à celles d'un dépôt métallique sous vide. Par exemple, elle permet d'augmenter de l'ordre de 80 % le pouvoir optique réfléchissant en lumière visible du film. Il est à noter cependant que l'invention permet précisément d'ajuster les propriétés de réflexion et d'opacité de cette couche 17 d'encre métallisée selon différentes valeurs, en fonction de l'application. En diminuant la quantité de la charge de particules métallisées, on diminue la réflexivité et l'opacité de la couche 17 d'encre métallisée. Au contraire, en augmentant la quantité de cette charge, on augmente la réflexivité et l'opacité.

Pour obtenir un effet miroir coloré, on peut utiliser une composition d'impression comprenant un liant durci incorporant au moins un colorant soluble dans les solvants organiques tels que ceux commercialisés par CIBA (Bâle, Suisse) référencé Ciba OROSOL.

Sans ajout de colorants dans la composition d'impression comprenant les particules métallisées un effet miroir argent est obtenu. Pour obtenir un aspect or on utilise des colorants de teinte jaune orangé, pour obtenir un aspect chrome on utilise des colorants de teinte bleue, pour obtenir un aspect nickel on utilise des colorants de teinte verte, pour obtenir un aspect cuivre on utilise des colorants de teinte rouge orangé.

En outre, les particules métallisées présentent des dimensions moyennes adaptées pour permettre l'impression selon le procédé d'impression retenu, avec la précision et la qualité requises. Avantageusement, les particules métallisées présentent une granulométrie moyenne comprise entre 8 µm et 11 µm avec, dans le cas de plaquettes, une épaisseur de l'ordre de 300 angströms.

Par ailleurs, on constate que l'impression d'une couche 17 d'encre métallisée comprenant une charge de particules métallisées en forme générale de plaquettes sur la couche 15 de vernis de finition très lisse et à haute tension superficielle entraîne, malgré les faibles dimensions de ces particules métallisées, le couchage spontané des différentes particules parallèlement à la surface, augmentant considérablement l'effet de réflexion obtenu. De la sorte, pour un même effet optique, on peut réduire la quantité de charge de particules métallisées, ce qui facilite les opérations de réalisation de l'impression de la couche 17 d'encre métallisée.

Dans l'exemple représenté sur la figure 1d, seules deux images holographiques 13a, 13b sont recouvertes par des motifs 17a, 17b d'encre métallisée imprimée réfléchissante, et une image holographique 13c n'est pas recouverte par un tel motif métallisé.

Dans une étape ultérieure (figure le), on recouvre le film d'une couche 18 d'adhésif continue, de préférence au moins sensiblement au format du support 10. Cette couche 18 d'adhésif peut elle-même être recouverte d'une feuille protectrice séparable (non représentée), telle qu'un papier siliconé.

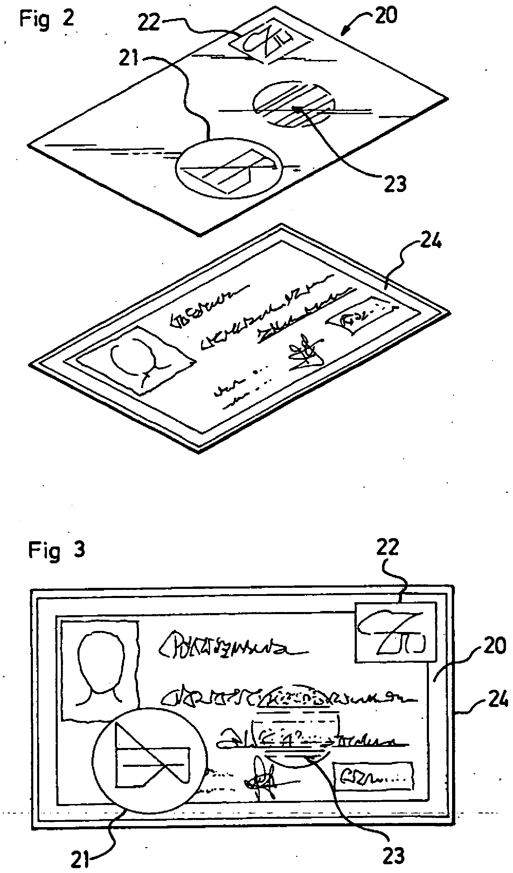

On obtient ainsi un film holographique 20 selon l'invention qui peut être appliqué sous forme d'une étiquette adhésive ou d'un transfert sur un substrat 24 à protéger comme représenté sur la figure 2. On obtient alors le résultat représenté figure 3. Comme on le voit, les deux images holographiques 13a, 13b recouvertes par des motifs 17a, 17b d'encre métallisée imprimée réfléchissante forment des motifs 21, 22 holographiques métallisés opaques qui sont visibles par transparence mais masquent les inscriptions et motifs sous-jacents.

En outre, l'image holographique 13c non recouverte par un motif métallisé forme un motif holographique 23 qui est aussi visible par transparence, la couche 14 réfléchissante HRI favorisant la visualisation de l'image holographique 13c correspondante. Néanmoins, ce motif holographique 23 n'est pas opaque et peut recouvrir des inscriptions ou motifs sous-jacents (par exemple des inscriptions variables d'une carte d'identité ou d'un passeport) sans les masquer totalement, notamment de façon à permettre leur lecture par transparence.

Il est à noter que dans l'exemple représenté schématiquement sur les figures 2 et 3, les motifs 21, 22, 23 sont représentés avec des formes géométriques simples.

Néanmoins, l'invention permet de réaliser motifs 17a, 17b d'encre métallisée imprimée réfléchissante, et donc des motifs 21, 22 holographiques métallisés opaques de haute définition, avec des formes très complexes et très fines, par exemple sous forme de logotypes d'aire moyenne inférieure à 5cm² -notamment de l'ordre de 1cm²- et/ou de textes fins de 0,6 mm de hauteur de caractères et/ou des microtextes de moins de 0,1 mm de hauteur de caractères et/ou de motifs guillochés de 0,1 mm de largeur de trait ou autres, avec une très haute définition. En effet, ces motifs sont réalisés par impression, par exemple par impression sérigraphique.

Dans l'exemple préférentiel de film holographique 20 selon l'invention représenté sur les figures, le support transparent 10, la couche de détachement 11 éventuellement prévue, l'ensemble 12 estampé, la couche 14 réfléchissante HRI, la couche 15 de vernis de finition, et la couche 18 d'adhésif sont de préférence au moins sensiblement au même format, qui peut correspondre par exemple au format d'une vignette adhésive destinée à recouvrir un document officiel comme représenté dans l'exemple des figures 2 et 3. Par contre, la couche 17 d'encre métallisée imprimée est réalisée avec des motifs présentant un format inférieur à celui du support transparent 10, et en général avec des motifs discontinus.

Toute autre variante peut néanmoins être envisagée, selon les applications, par exemple avec un support transparent 10 présentant un format supérieur à toutes les autres couches, avec des formats des différentes couches qui varient légèrement ou de façon importante les unes par rapport aux autres, et même avec une couche 17 d'encre métallisée imprimée complètement continue, par exemple au format du support 10.

Plus généralement, l'invention peut faire l'objet de nombreuses variantes et applications différentes au-delà des modes de réalisation décrits ci-dessus.

## Revendications

1. Film holographique métallisé comprenant :
- au moins un support (10),
- au moins une couche transparente, dite couche (12) holographique, présentant au moins un motif apte à former au moins une image, dite image (13a, 13b, 13c) holographique, visible en transparence et par diffraction,
- au moins une couche réfléchissante (14, 17) s'étendant en regard dudit support, ladite couche réfléchissante étant une couche (17) d'encre métallisée imprimée s'étendant en regard et au format de ladite image (13a, 13b, 13c) holographique formant ainsi une image (13a, 13b) holographique métallisée, **caractérisé en ce que** :
- ladite couche (17) d'encre métallisée imprimée comprend un liant durci incorporant au moins une charge de particules métallisées présentant un aspect métallique réfléchissant,
- ladite charge de particules métallisées comprend des particules en forme générale de plaquettes présentant des faces réfléchissantes, et **en ce que** ladite couche (17) d'encre métallisée imprimée est appliquée au contact d'une couche (15) présentant une tension de surface supérieure à 40 dynes/cm et un état de surface lisse de réflexion spéculaire supérieure à 50% mesurée selon la norme ISO 2813 avec un angle de 60°.

2. Film selon la revendication 1, **caractérisé en ce que** ladite couche (17) d'encre métallisée imprimée comprend au moins une charge de particules métallisées choisies parmi les pigments métallisés sous vide et les particules métalliques réfléchissantes.

3. Film selon l'une des revendications 1 ou 2, **caractérisé en ce que** lesdites particules métallisées présentent une granulométrie moyenne comprise entre 8 µm et 11 µm.

4. Film selon l'une des revendications 1 à 3, **caractérisé en ce qu'**au moins une couche holographique est formée d'une couche (12) transparente estampée de façon à présenter des microstructures aptes à former au moins une image holographique.

5. Film selon l'une des revendications 1 à 4, **caractérisé en ce que** ladite couche (17) d'encre métallisée imprimée s'étend selon au moins un motif (17a, 17b) présentant un format inférieur à celui du film.

6. Film selon l'une des revendications 1 à 5, **caractérisé en ce qu'**il comprend :
- un support (10) transparent définissant son format,
- au moins une couche (12) holographique recouvrant ledit support (10) et de format similaire à celui du support,
- au moins une couche (14, 15) transparente recouvrant la(les) couche(s) holographique(s) et de format similaire à celui du support (10),
et **en ce que** chaque couche (17) d'encre métallisée imprimée s'étend sur la dernière couche (15) transparente selon un format inférieur à celui du support (10).

7. Film selon l'une des revendications 1 à 6, **caractérisé en ce qu'**il comprend au moins une couche (14) à haut indice de réfraction optique entre la(les) couche(s) (12) holographique(s) et chaque couche (17) d'encre métallisée imprimée.

8. Film selon les revendications 6 et 7, **caractérisé en ce que** chaque couche (14) à haut indice de réfraction optique s'étend selon un format similaire à celui du support (10).

9. Film selon l'une des revendications 6 à 8, **caractérisé en ce qu'**il comprend une couche (18) d'adhésif à l'opposé du support (10).

10. Film selon l'une des revendications 6 à 9, **caractérisé en ce qu'**il comprend une couche (11) de détachement entre le support (10) et la(les) couche(s) (12) holographique(s), de façon à former un transfert.

11. Procédé de fabrication d'un film holographique métallisé dans lequel :
- on utilise au moins un support,
- on réalise avec au moins une couche transparente, dite couche (12) holographique, au moins un motif apte à former au moins une image, dite image (13a, 13b, 13c) holographique, visible en transparence et par diffraction,
- on applique au moins une couche (14, 17) réfléchissante s'étendant en regard dudit support,
- pour réaliser au moins une couche réfléchissante on imprime une couche (17) d'encre métallisée en regard dudit support et en regard et au format de ladite image holographique de façon à obtenir une image (13a, 13b) holographique métallisée,
**caractérisé en ce que** :
- pour réaliser ladite couche (17) d'encre métallisée imprimée, on utilise une composition d'impression comprenant un liant durcissable incorporant au moins une charge de particules métallisées présentant un aspect métallique réfléchissant,
- on utilise une composition d'impression comprenant, à titre de charges de particules métallisées, des particules en forme générale de plaquettes présentant des faces réfléchissantes, et **en ce qu'**on imprime ladite couche (17) d'encre métallisée imprimée au contact d'une couche (15) présentant une tension de surface supérieure à 40 dynes/cm et un état de surface lisse de réflexion spéculaire supérieure à 50% mesurée selon la norme ISO 2813 avec un angle de 60°.

12. Procédé selon la revendication 11 , **caractérisé en ce qu'**on imprime au moins une couche (17) d'encre métallisée par une méthode choisie parmi l'impression sérigraphique et la flexographie.

13. Procédé selon l'une des revendications 11 ou 12, **caractérisé en ce qu'**on utilise une composition d'impression comprenant au moins une charge de particules métallisées choisies parmi les pigments métallisés et les particules métalliques réfléchissantes.

## Patentansprüche

1. Holografischer metallisierter Film umfassend:
- mindestens einen Träger (10),
- mindestens eine transparente Schicht, genannt holografische Schicht (12), die mindestens ein Muster aufweist, fähig zur Bildung mindestens eines Bildes, genannt holografisches Bild (13a, 13b, 13c), transparent und durch Diffraktion sichtbar,
- mindestens eine reflektierende Schicht (14,17), die sich gegenüber des besagten Trägers erstreckt, wobei die besagte reflektierende Schicht eine bedruckte metallisierte Tintenschicht (17) ist, die sich gegenüber und im Format des besagten holografischen Bildes (13a, 13b, 13c) erstreckt, so dass ein metallisiertes holografisches Bild (13a, 13b) gebildet wird,
**dadurch gekennzeichnet, dass**:
- die besagte bedruckte metallisierte Tintenschicht (17) ein gehärtetes Bindemittel mit mindestens einer Beladung metallisierter Teilchen umfasst, die ein reflektierendes metallisches Aussehen aufweisen,
- die besagte Beladung metallisierter Teilchen reflektierende Seiten aufweisende im Wesentlichen plättchenförmige Teilchen umfasst, und dadurch, dass die besagte bedruckte metallisierte Tintenschicht (17) in Berührung mit einer Schicht (15) angebracht ist, die eine Oberflächenspannung von mehr als 40 Dyn/cm und eine Oberflächenglattheit der Spiegelreflexion von mehr als 50%, gemessen gemäß der Norm ISO 2813 mit einem Winkel von 60°, aufweist.

2. Film nach Anspruch 1, **dadurch gekennzeichnet, dass** die besagte bedruckte metallisierte Tintenschicht (17) mindestens eine Beladung metallisierter Teilchen umfasst, ausgewählt aus vakuum-metallisierten Pigmenten und reflektierenden metallischen Teilchen.

3. Film nach einem der Ansprüche 1 oder 2, **dadurch gekennzeichnet, dass** die besagten metallisierten Teilchen eine mittlere Korngröße zwischen 8 µm und 11 µm aufweisen.

4. Film nach einem der Ansprüche 1 bis 3, **dadurch gekennzeichnet, dass** mindestens eine holografische Schicht aus einer transparenten Prägeschicht (12) gebildet ist, um Mikrostrukturen zur Bildung von mindestens einem holografischen Bild aufzuweisen.

5. Film nach einem der Ansprüche 1 bis 4, **dadurch gekennzeichnet, dass** die besagte bedruckte metallisierte Tintenschicht (17) sich gemäß mindestens einem Muster (17a, 17b), ein kleineres Format als dasjenige des Films aufweisend, erstreckt.

6. Film nach einem der Ansprüche 1 bis 5, **dadurch gekennzeichnet, dass** er Folgendes umfasst:
- einen transparenten, sein Format festlegenden, Träger (10),
- mindestens eine holografische Schicht (12), die den besagten Träger (10) bedeckt und ein Format ähnlich demjenigen des Trägers aufweist,
- mindestens eine transparente Schicht (14, 15), die die besagte(n) holografische(n) Schicht (en) bedeckt und ein Format ähnlich demjenigen des Trägers (10) aufweist, und dass jede bedruckte metallisierte Tintenschicht (17) sich auf der letzten transparenten Schicht (15) gemäß einem Format, das kleiner ist als dasjenige des Trägers (10), erstreckt.

7. Film nach einem der Ansprüche 1 bis 6, **dadurch gekennzeichnet, dass** er mindestens eine Schicht (14) mit einem hohen optischen Brechungsindex zwischen der(den) holografischen Schicht(en) (12) und jeder bedruckten metallisierten Tintenschicht (17) umfasst.

8. Film nach den Ansprüchen 6 und 7, **dadurch gekennzeichnet, dass** jede Schicht (14) mit einem hohen optischen Brechungsindex sich gemäß einem Format ähnlich demjenigen des Trägers (10) erstreckt.

9. Film nach einem der Ansprüche 6 bis 8, **dadurch gekennzeichnet, dass** er eine Klebstoffschicht (18) gegenüber dem Träger (10) umfasst.

10. Film nach einem der Ansprüche 6 bis 9, **dadurch gekennzeichnet, dass** er eine Ablösungsschicht (11) zwischen dem Träger (10) und der(den) holografischen Schicht(en) (12) umfasst, um eine Übertragung zu bilden.

11. Verfahren zur Herstellung eines metallisierten Films, wobei:
- man mindestens einen Träger verwendet,
- man mit mindestens einer transparenten Schicht, genannt holografische Schicht (12), mindestens ein Muster erzeugt, fähig zur Bildung mindestens eines Bildes, genannt holografisches Bild (13a, 13b, 13c), transparent und durch Diffraktion sichtbar,
- man mindestens eine reflektierende Schicht (14, 17) anbringt, die sich gegenüber dem besagten Träger erstreckt,
- man zur Erzeugung mindestens einer reflektierenden Schicht eine metallisierte Tintenschicht (17) gegenüber dem besagten Träger und gegenüber und im Format des besagten holografischen Bildes bedruckt, um ein metallisiertes holografisches Bild (13a, 13b) zu erhalten,
**dadurch gekennzeichnet, dass**:
- man zur Erzeugung der besagten bedruckten metallisierten Tintenschicht (17) eine Druckzusammensetzung verwendet, die ein härtbares Bindemittel mit mindestens einer Beladung metallisierter Teilchen, die ein reflektierendes metallisches Aussehen aufweisen, umfasst,
- man eine Druckzusammensetzung verwendet, die als Beladungen metallisierter Teilchen, reflektierende Seiten aufweisende, im Wesentlichen plättchenförmige, Teilchen umfasst, und dadurch, dass man die besagte bedruckte metallisierte Tintenschicht (17) in Berührung mit einer Schicht (15) bedruckt, die eine Oberflächenspannung von mehr als 40 Dyn/cm und eine Oberflächenglattheit der Spiegelreflexion von mehr als 50%, gemessen gemäß der Norm ISO 2813 mit einem Winkel von 60°, aufweist.

12. Verfahren nach Anspruch 11, **dadurch gekennzeichnet, dass** man mindestens eine metallisierte Tintenschicht (17) durch ein Verfahren, ausgewählt aus Siebdruck und Flexodruck bedruckt.

13. Verfahren nach einem der Ansprüche 11 oder 12, **dadurch gekennzeichnet, dass** man eine Druckzusammensetzung verwendet, die mindestens eine Beladung metallisierter Teilchen umfasst, ausgewählt aus metallisierten Pigmenten und reflektierenden metallischen Teilchen.

## Claims

1. Metallised holographic film including:
- at least one backing(10),
- at least one transparent layer, named holographic layer(12), exhibiting at least one motif that is capable of forming at least one image, named holographic image (13a, 13b, 13c), which is visible by showing through and by diffraction,
- at least one reflective layer (14, 17) which extends facing said backing, said reflective layer (17) is a layer of printed metallised ink which extends facing and in the format of said holographic image (13a, 13b, 13c), thus forming a metallised holographic image (13a, 13b), **characterised in that**:
- said layer(17)of printed metallised ink includes a hardened binder incorporating at least one charge of metallised particles exhibiting a reflective metal appearance,
- said charge of metallised particles includes particles in the general form of platelets exhibiting reflective faces, and **in that** said layer (17) of printed metallised ink is applied in contact with a layer(15)exhibiting a surface tension greater than 40 dynes/cm and a smooth surface quality of specular reflection greater than 50% measured in accordance with standard ISO 2813 with an angle of 60°.

2. Film according to Claim 1, **characterised in that** said layer (17) of printed metallised ink includes at least one charge of metallised particles chosen from pigments metallised under vacuum and reflective metallic particles.

3. Film according to one of Claims 1 or 2, **characterised in that** said metallised particles exhibit a mean grain-size distribution ranging between 8 µm and 11 µm.

4. Film according to one of Claims 1 to 3, **characterised in that** at least one holographic layer is formed from a transparent layer (12) embossed in such a way as to exhibit microstructures that are capable of forming at least one holographic image.

5. Film according to one of Claims 1 to 4, **characterised in that** said layer (17) of printed metallised ink extends in accordance with at least one motif (17a, 17b)exhibiting a format smaller than that of the film.

6. Film according to one of Claims 1 to 5, **characterised in that** it includes:
- a transparent backing(10)defining its format,
- at least one holographic layer(12)covering said backing(10)and of a format similar to that of the backing,
- at least one transparent layer (14, 15) covering the holographic layer(s) and of a format similar to that of the backing (10),
and **in that** each layer (17) of printed metallised ink extends over the last transparent layer(15)in accordance with a format smaller than that of the backing(10).

7. Film according to one of Claims 1 to 6, **characterised in that** it includes at least one layer (14) with high index of optical refraction between the holographic layer(s) (12) and each layer (17) of printed metallised ink.

8. Film according to Claims 6 and 7, **characterised in that** each layer(14)with high index of optical refraction extends in accordance with a format similar to that of the backing (10).

9. Film according to one of Claims 6 to 8, **characterised in that** it includes a layer (18) of adhesive opposite the backing(10).

10. Film according to one of Claims 6 to 9, **characterised in that** it includes a detachment layer (11) between the backing(10)and the holographic layer(s) (12) in such a way as to form a transfer.

11. Method for manufacture of a holographic metallised film, in which:
- at least one backing is used,
- with at least one transparent layer, named holographic layer (12), at least one motif is created that is capable of forming at least one image, named holographic image (13a, 13b, 13c), which is visible by showing through and by diffraction,
- at least one reflective layer (14, 17) is applied extending facing said backing,
- in order to create at least one reflective layer, a layer of metallised ink(17)is printed facing and in the format of at least one holographic image in such a way as to obtain a metallised holographic image (13a, 13b), **characterised in that**:
- in order to create said layer (17) of printed metallised ink, a printing composition is used including a hardened binder incorporating at least one charge of metallised particles exhibiting a reflective metallic appearance,
- a printing composition is used that includes, by way of charge of metallised particles, particles in the general form of platelets exhibiting reflective faces, and **in that** said layer (17) of printed metallised ink is printed in contact with a layer (15) exhibiting a surface tension greater than 40 dynes/cm and a smooth surface quality specular reflection greater than 50%, measured in accordance with standard ISO 2813 with an angle of 60°.

12. Method according to Claim 11, **characterised in that** at least one layer (17) of metallised ink is printed by serigraphic and flexographic printing.

13. Method according to one of Claims 11 or 12, **characterised in that** a printing composition including at least one charge of metallised particles chosen from metallised pigments and reflective metallic particles is used.
